(19) Europäisches Patentamt
European Patent Office
Office européen des brevets

(11) EP 3 120 901 A1

(12) EUROPEAN PATENT APPLICATION
published in accordance with Art. 153(4) EPC

(43) Date of publication:
25.01.2017 Bulletin 2017/04

(51) Int Cl.:
A63B 69/36 (2006.01)

(21) Application number: 15764612.6

(22) Date of filing: 09.03.2015

(86) International application number:
PCT/JP2015/001249

(87) International publication number:
WO 2015/141173 (24.09.2015 Gazette 2015/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 17.03.2014 JP 2014053288

(71) Applicant: Seiko Epson Corporation
Tokyo 160-8801 (JP)

(72) Inventor: KANO, Toshihiko
Suwa-shi
Nagano 392-8502 (JP)

(74) Representative: Hoffmann Eitle
Patent- und Rechtsanwälte PartmbB
Arabellastraße 30
81925 München (DE)

(54) MOVEMENT ANALYSIS METHOD, MOVEMENT ANALYSIS DEVICE, MOVEMENT ANALYSIS SYSTEM AND PROGRAM

(57) A motion analysis method, a motion analysis apparatus, a motion analysis system, and a program, capable of presenting useful information in order for a subject to improve a swing, are to be provided.

A motion analysis method includes generating first attitude information regarding an attitude of an exercise appliance during address of a subject, using outputs from an inertial sensor, generating second attitude information regarding an attitude of the exercise appliance during ball hitting of the subject, using outputs from the inertial sensor, and generating attitude difference information regarding an attitude difference between an attitude of the exercise appliance during the address of the subject and an attitude of the exercise appliance during the ball hitting of the subject using the first attitude information and the second attitude information.

START

ACQUIRE MEASURED DATA FROM SENSOR UNIT — S10

DETECT STOPPAGE ACTION — S20

CALCULATE INITIAL POSITION AND INITIAL ATTITUDE OF SENSOR UNIT DURING ADDRESS — S30

CALCULATE SOME OR ALL OF LIE ANGLE $\alpha_1$, FACE ANGLE $\beta_1$, AND LOFT ANGLE $\gamma_1$ DURING ADDRESS, SO AS TO GENERATE FIRST ATTITUDE INFORMATION — S40

DETECT TIMING OF BALL HITTING — S50

CALCULATE POSITION AND ATTITUDE OF SENSOR UNIT DURING SWING ACTION — S60

CALCULATE TRAJECTORY OF MOTION ANALYSIS MODEL — S70

CALCULATE SOME OR ALL OF LIE ANGLE $\alpha_2$, FACE ANGLE $\beta_2$, AND LOFT ANGLE $\gamma_2$ DURING BALL HITTING SO AS TO GENERATE SECOND ATTITUDE INFORMATION — S80

CALCULATE SOME OR ALL OF LIE ANGLE DIFFERENCE $\alpha_2 - \alpha_1$, FACE ANGLE DIFFERENCE $\beta_2 - \beta_1$, AND LOFT ANGLE DIFFERENCE $\gamma_2 - \gamma_1$ BETWEEN TIME OF BALL HITTING AND TIME OF ADDRESS SO AS TO GENERATE ATTITUDE DIFFERENCE INFORMATION — S90

GENERATE ADVICE INFORMATION ON THE BASIS OF ATTITUDE DIFFERENCE INFORMATION — S100

END

FIG. 8

EP 3 120 901 A1

**Description**

Technical Field

The present invention relates to a motion analysis method, a motion analysis apparatus, a motion analysis system, and a program, for analyzing motion of a subject.

Background Art

In the related art, there is a camera system in which an image of a golf swing is captured with a camera, and the swing is analyzed on the basis of the captured image, but, in such a camera system, since a large-scale apparatus is necessary, an installation location is selected, and thus simple measurement cannot be performed, and convenience deteriorates. In contrast, PTL 1 proposes an apparatus in which a three-axis acceleration sensor and a three-axis gyro sensor are attached to a golf club, and a swing is analyzed using outputs from the sensors, and, if the apparatus is used, a camera is not necessary, and convenience is improved. In a golf swing analysis apparatus using a sensor, information during impact can be presented, and a subject can understand whether or not the swing is an ideal swing which causes a ball to be hit in an aimed direction.

Citation List

Patent Literature

PTL 1: JP-A-2008-73210

Summary of Invention

Technical Problem

However, a swing habit is greatly different for each person, and thus a concept of ideal swing is also different for each person. Thus, there is a problem in that, even if the subject understands that the swing is not an ideal swing on the basis of the information during impact, the subject is required to find an ideal swing suitable for the subject through trial and error.
The invention has been made in consideration of the above-described problems, and some aspects of the invention are to provide a motion analysis method, a motion analysis apparatus, a motion analysis system, and a program, capable of presenting useful information in order for a subject to improve a swing.

Solution to Problem

The invention has been made in order to solve at least a part of the above-described problems, and can be realized in the following aspects or application examples.

[Application Example 1]

A motion analysis method according to this application example includes generating first attitude information regarding an attitude of an exercise appliance during address of a subject, using outputs from an inertial sensor; generating second attitude information regarding an attitude of the exercise appliance during ball hitting of the subject, using outputs from the inertial sensor; and generating attitude difference information regarding an attitude difference between an attitude of the exercise appliance during the address and an attitude of the exercise appliance during the ball hitting using the first attitude information and the second attitude information.
The exercise appliance is an appliance used to hit a ball, such as a golf club, a tennis racket, a baseball bat, and a hockey stick.
The inertial sensor may be a sensor which can measure an inertial amount such as acceleration or angular velocity, and may be, for example, an inertial measurement unit (IMU) which can measure acceleration or angular velocity. The inertial sensor may be attachable to and detachable, and may be fixed to an exercise appliance so as not to be detached therefrom, for example, as a result of being built into the exercise appliance.
According to the motion analysis method of this application example, since information regarding an attitude difference between an attitude of the exercise appliance during address and an attitude of the exercise appliance during ball hitting is presented as useful information in order for a subject to improve a swing, it is possible to prompt the subject to improve a swing.

According to the motion analysis method of this application example, since attitude difference information can be generated using outputs from the inertial sensor attached to the exercise appliance, it is not necessary to prepare a large-sized measurement tool such as a camera, and a measurement location is not greatly limited.

[Application Example 2]

In the motion analysis method according to the application example, the inertial sensor may include an acceleration sensor, and, in the generating of first attitude information, an inclination amount of the exercise appliance with a direction of the gravitational acceleration as a reference may be calculated using outputs from the acceleration sensor during the address, and the first attitude information may be generated using the inclination amount.

According to the motion analysis method of this application example, it is possible to specify a direction of the gravitational acceleration using outputs from the acceleration sensor during address and thus to generate the first attitude information.

[Application Example 3]

In the motion analysis method according to the application example, the inertial sensor may include an angular velocity sensor, and, in the generating of second attitude information, an attitude change amount of the inertial sensor from the time of address to the time of ball hitting may be calculated using outputs from the angular velocity sensor, and the second attitude information may be generated using the attitude change amount.

According to the motion analysis method of this application example, it is possible to calculate an attitude of the exercise appliance during address and an attitude change of the exercise appliance from the time of address to the time of ball hitting, and to specify an attitude of the exercise appliance during ball hitting so as to generate the second attitude information.

[Application Example 4]

The motion analysis method according to the application example may further include generating advice information regarding an attitude to be taken by the exercise appliance or the subject during the address, using the attitude difference information.

According to the motion analysis method of this application example, the subject can specifically recognize an attitude to be taken by the exercise appliance or the subject during address on the basis of the advice information.

[Application Example 5]

In the motion analysis method according to the application example, the first attitude information and the second attitude information may include information regarding an angle of a shaft of the exercise appliance relative to a horizontal plane.

The shaft is a shaft portion of the exercise appliance and may also include a grip portion.

According to the motion analysis method of this application example, it is possible to present information based on a difference in a shaft angle relative to the horizontal plane during address and during ball hitting.

[Application Example 6]

In the motion analysis method according to the application example, the first attitude information and the second attitude information may include information regarding an angle of a hitting portion of the exercise appliance relative to a virtual plane orthogonal to a target line indicating a hit ball direction.

According to the motion analysis method of this application example, it is possible to present information based on a difference in a hitting portion angle relative to the virtual plane orthogonal to the target line during address and during ball hitting.

[Application Example 7]

In the motion analysis method according to the application example, the first attitude information and the second attitude information may include information regarding an angle of the hitting portion of the exercise appliance relative to a plane orthogonal to the horizontal plane.

According to the motion analysis method of this application example, it is possible to present information based on a difference in a hitting portion angle relative to the plane orthogonal to the horizontal plane during address and during ball hitting.

[Application Example 8]

In the motion analysis method according to this application example, the inertial sensor may be attached to the exercise appliance.

[Application Example 9]

In the motion analysis method according to the application example, the exercise appliance may be a golf club.
According to the motion analysis method of this application example, it is possible to prompt the subject to improve a golf swing.

[Application Example 10]

A motion analysis apparatus according to this application example includes a first attitude information generation portion generating first attitude information regarding an attitude of an exercise appliance during address of a subject, using outputs from an inertial sensor; a second attitude information generation portion generating second attitude information regarding an attitude of the exercise appliance during ball hitting of the subject, using outputs from the inertial sensor; and an attitude difference information generation portion generating attitude difference information regarding an attitude difference between an attitude of the exercise appliance during the address and an attitude of the exercise appliance during the ball hitting using the first attitude information and the second attitude information.
According to the motion analysis apparatus of this application example, since information regarding an attitude difference between an attitude of the exercise appliance during address and an attitude of the exercise appliance during ball hitting is presented, it is possible to prompt the subject to improve a swing.
According to the motion analysis apparatus of this application example, since attitude difference information can be generated using outputs from the inertial sensor attached to the exercise appliance, it is not necessary to prepare a large-sized measurement tool such as a camera, and a measurement location is not greatly limited.

[Application Example 11]

A motion analysis system according to this application example includes the motion analysis apparatus; and the inertial sensor.
According to the motion analysis system of this application example, since information regarding an attitude difference between an attitude of the exercise appliance during address and an attitude of the exercise appliance during ball hitting is presented, it is possible to prompt the subject to improve a swing.

[Application Example 12]

A program according to this application example causes a computer to execute generating first attitude information regarding an attitude of an exercise appliance during address of a subject, using outputs from an inertial sensor; generating second attitude information regarding an attitude of the exercise appliance during ball hitting of the subject, using outputs from the inertial sensor; and generating attitude difference information regarding an attitude difference between an attitude of the exercise appliance during the address and an attitude of the exercise appliance during the ball hitting using the first attitude information and the second attitude information.
According to the program of this application example, since information regarding an attitude difference between an attitude of the exercise appliance during address and an attitude of the exercise appliance during ball hitting is presented, it is possible to prompt the subject to improve a swing.
According to the program of this application example, since attitude difference information can be generated using outputs from the inertial sensor attached to the exercise appliance, it is not necessary to prepare a large-sized measurement tool such as a camera, and a measurement location is not greatly limited.

Brief Description of Drawings

[Fig. 1] Fig. 1 is a diagram illustrating a motion analysis system according to the present embodiment.

[Fig. 2] Fig. 2 is a diagram illustrating examples of a position where and a direction in which a sensor unit is attached.

[Fig. 3] Fig. 3 is a diagram illustrating a procedure of actions performed by a subject in the present embodiment.

[Fig. 4] Fig. 4 is a diagram for explaining a lie angle.

[Fig. 5] Fig. 5 is a diagram for explaining a face angle.

[Fig. 6] Fig. 6 is a diagram for explaining a loft angle.

[Fig. 7] Fig. 7 is a diagram illustrating a configuration example of a motion analysis system according to the present embodiment.

[Fig. 8] Fig. 8 is a flowchart illustrating examples of procedures of an advice information generation process in the present embodiment.

[Fig. 9] Fig. 9 is a diagram illustrating a relationship between a gravitational acceleration component measured by a sensor unit during address, and a lie angle.

[Fig. 10] Fig. 10 is a flowchart illustrating examples of procedures of a process of detecting timing at which the subject has hit a ball.

[Fig. 11] Fig. 11(A) is a diagram in which three-axis angular velocities during swing are displayed in a graph, Fig. 11(B) is a diagram in which a calculated value of a norm of the three-axis angular velocities is displayed in a graph, and Fig. 11(C) is a diagram in which a calculated value of a derivative of the norm of the three-axis angular velocities is displayed in a graph.

[Fig. 12] Fig. 12 is a flowchart illustrating examples of procedures of a process of calculating an attitude of the sensor unit.

Description of Embodiments

Hereinafter, preferred embodiments of the invention will be described with reference to the drawings. The embodiments described below are not intended to improperly limit the content of the invention disclosed in the appended claims. In addition, all constituent elements described below are not essential constituent elements of the invention.

Hereinafter, a motion analysis system (motion analysis apparatus) analyzing a golf swing will be described as an example.

1. Motion Analysis System

[Outline of motion analysis system]

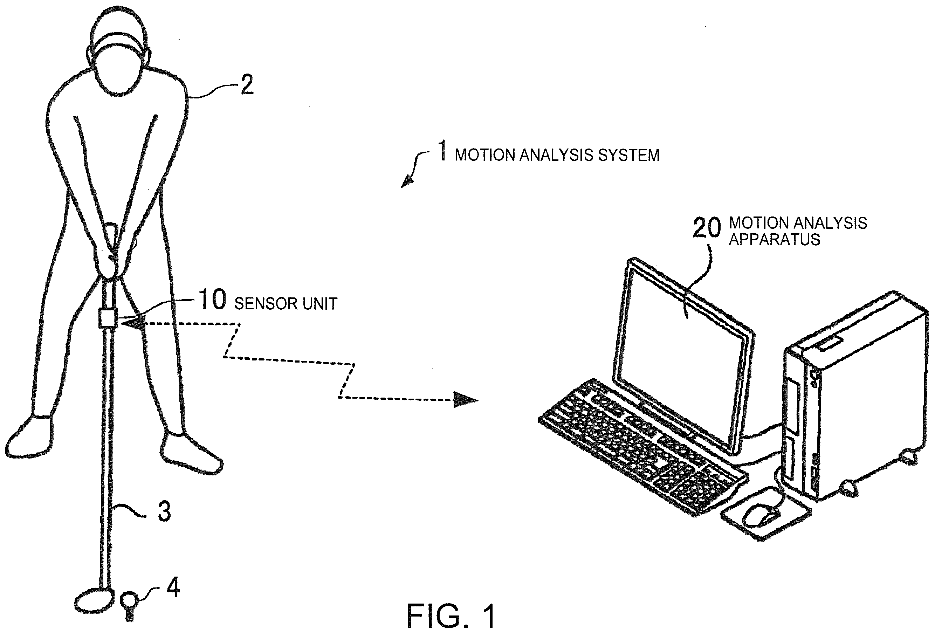

Fig. 1 is a diagram for explaining an outline of a motion analysis system according to the present embodiment. A motion analysis system 1 of the present embodiment is configured to include a sensor unit 10 (an example of an inertial sensor) and a motion analysis apparatus 20.

The sensor unit 10 can measure acceleration generated in each axial direction of three axes and angular velocity generated around each of the three axes, and is attached to the shaft of a golf club 3 (an example of an exercise appliance). The shaft is a shaft portion other than a head of the golf club 3 and also includes a grip portion.

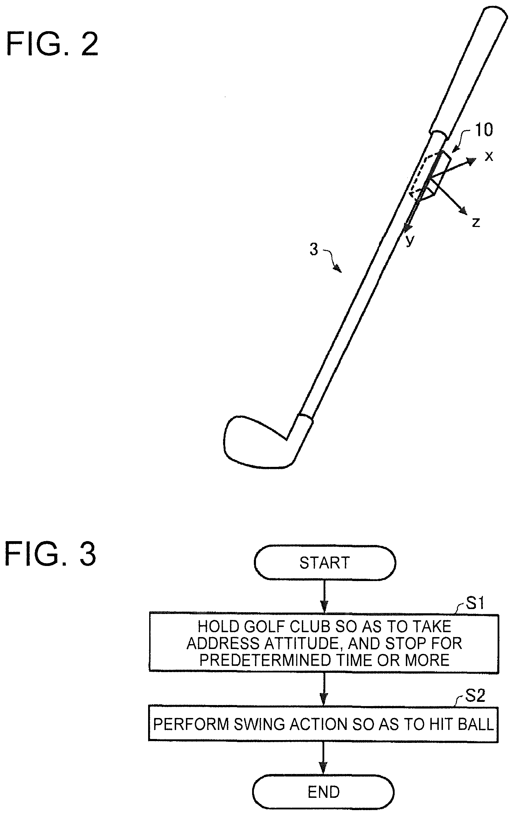

In the present embodiment, as illustrated in Fig. 2, the sensor unit 10 is attached so that one axis of three detection axes (an x axis, a y axis, and a z axis), for example, the y axis matches a long axis direction of the shaft.

The subject 2 performs a swing action for hitting a golf ball 4 according to predefined procedures. Fig. 3 is a diagram illustrating procedures of actions performed by the subject 2. As illustrated in Fig. 3, first, the subject 2 holds the golf club 3 so as to take an address attitude, and stops for a predetermined time period or more (for example, for one second or more) (S1). Next, the subject 2 performs a swing action so as to hit the golf ball 4 (S2).

While the subject 2 performs the action of hitting the golf ball 4 according to the procedures illustrated in Fig. 3, the sensor unit 10 measures three-axis acceleration and three-axis angular velocity at a predetermined cycle (for example, 1 ms), and sequentially transmits measured data to the motion analysis apparatus 20. The sensor unit 10 may instantly transmit the measured data, and may store the measured data in an internal memory and transmit the measured data at a desired timing such as completion of a swing action of the subject 2. Alternatively, the sensor unit 10 may store the measured data in an attachable/detachable recording medium such as a memory card, and the motion analysis apparatus 20 may read the measured data from the recording medium.

The motion analysis apparatus 20 generates information (first attitude information) regarding an attitude of the golf club 3 during address of the subject 2 and information (second attitude information) regarding an attitude of the golf club 3 during ball hitting, using data measured by the sensor unit 10. The first attitude information and the second attitude information may include, for example, some or all of a lie angle (an inclined angle of the shaft of the golf club 3), a face angle (an azimuth angle of the face of the golf club 3), and a loft angle (an inclined angle of the face of the golf club 3) during address or ball hitting (impact) of the subject 2.

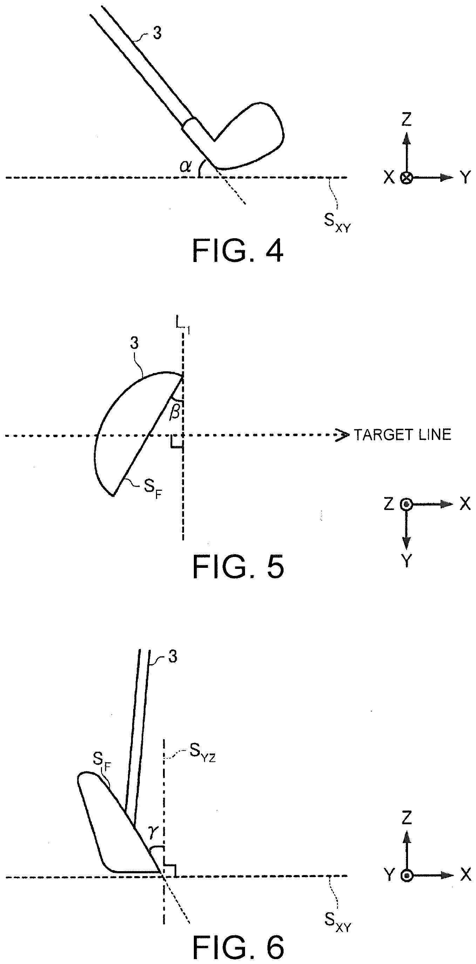

Figs. 4, 5 and 6 are respectively diagrams for explaining definition of a lie angle, a face angle, and a loft angle during address of the subject 2 or during swing. In the present embodiment, an XYZ coordinate system is defined which has a target line indicating a hit ball direction as an X axis, an axis on a horizontal plane which is perpendicular to the X axis as Y axis, and a vertically upward direction (a direction opposite to the gravitational acceleration direction) as a Z axis. Figs. 4, 5 and 6 illustrate the X axis, the Y axis, and the Z axis. The target line indicates, for example, a direction in which a ball flies straight. As illustrated in Fig. 4, a lie angle during address of the subject 2 or during swing is defined as an angle $\alpha$ of the shaft of the golf club 3 relative to an XY plane $S_{XY}$ (an example of a horizontal plane). As illustrated in Fig. 5, a face angle is defined as an angle P of a face surface $S_F$ of the golf club 3 relative to a virtual plane L1 orthogonal to the target line. As illustrated in Fig. 6, a loft angle during address of the subject 2 or during swing is defined as an angle $\gamma$ formed between the face surface $S_F$ of the golf club 3 and a YZ plane $S_{YZ}$ (an example of a plane orthogonal to the horizontal plane).

The motion analysis apparatus 20 generates information (attitude difference information) regarding an attitude difference between an attitude of the golf club 3 during address and an attitude of the golf club 3 during ball hitting using the first attitude information and the second attitude information.

The motion analysis apparatus 20 generates advice information regarding an attitude to be taken by the golf club 3 during address so that the golf club 3 takes an ideal attitude during ball hitting, using the attitude difference information, and presents the advice information to the subject 2 with an image, a sound, vibration, or the like.

Communication between the sensor unit 10 and the motion analysis apparatus 20 may be wireless communication, and may be wired communication.

[Configuration of motion analysis system]

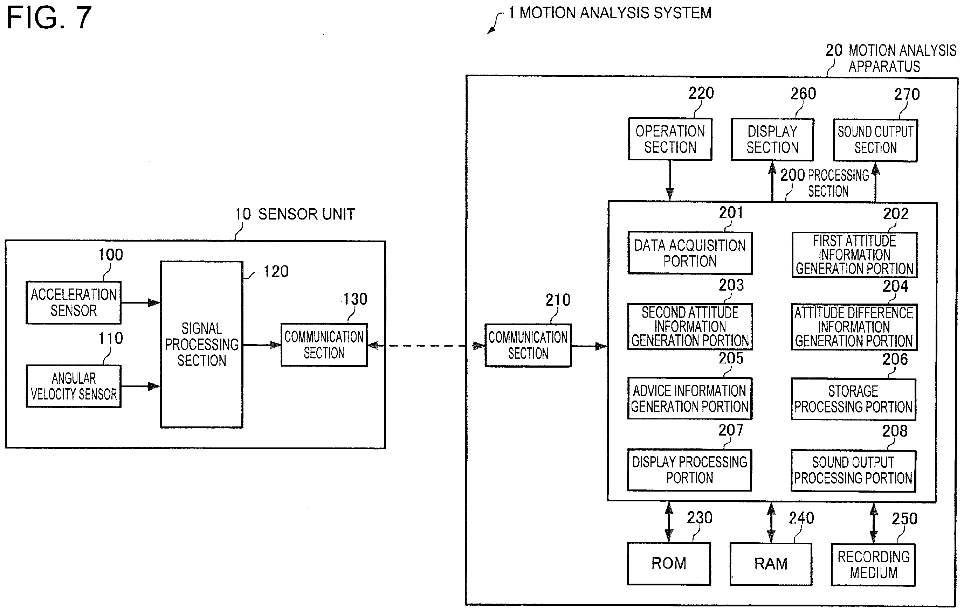

Fig. 7 is a diagram illustrating configuration examples of the sensor unit 10 and the motion analysis apparatus 20. As illustrated in Fig. 7, in the present embodiment, the sensor unit 10 is configured to include an acceleration sensor 100, an angular velocity sensor 110, a signal processing section 120, and a communication section 130.

The acceleration sensor 100 measures respective accelerations in three axial directions which intersect (ideally, orthogonal to) each other, and outputs digital signals (acceleration data) corresponding to magnitudes and directions of the measured three-axis accelerations.

The angular velocity sensor 110 measures respective angular velocities in three axial directions which intersect (ideally, orthogonal to) each other, and outputs digital signals (angular velocity data) corresponding to magnitudes and directions of the measured three-axis angular velocities.

The signal processing section 120 receives the acceleration data and the angular velocity data from the acceleration sensor 100 and the angular velocity sensor 110, respectively, adds time information thereto, stores the data in a storage portion (not illustrated), adds time information to the stored measured data (the acceleration data and the angular velocity data) so as to generate packet data conforming to a communication format, and outputs the packet data to the communication section 130.

Ideally, the acceleration sensor 100 and the angular velocity sensor 110 are provided in the sensor unit 10 so that the three axes thereof match three axes (an x axis, a y axis, and a z axis) of an orthogonal coordinate system defined for the sensor unit 10, but, actually, errors occur in installation angles. Therefore, the signal processing section 120 performs a process of converting the acceleration data and the angular velocity data into data in the xyz coordinate system using a correction parameter which is calculated in advance according to the installation angle errors.

The signal processing section 120 performs a process of correcting the temperatures of the acceleration sensor 100 and the angular velocity sensor 110. The acceleration sensor 100 and the angular velocity sensor 110 may have a temperature correction function.

The acceleration sensor 100 and the angular velocity sensor 110 may output analog signals, and, in this case, the signal processing section 120 may A/D-convert an output signal from the acceleration sensor 100 and an output signal from the angular velocity sensor 110 so as to generate measured data (acceleration data and angular velocity data), and may generate communication packet data using the data.

The communication section 130 performs a process of transmitting packet data received from the signal processing section 120 to the motion analysis apparatus 20, or a process of receiving a control command from the motion analysis apparatus 20 and sending the control command to the signal processing section 120. The signal processing section 120 performs various processes corresponding to control commands.

The motion analysis apparatus 20 is configured to include a processing section 200, a communication section 210, an operation section 220, a ROM 230, a RAM 240, a recording medium 250, a display section 260, and a sound output section 270, and may be, for example, a personal computer (PC) or a portable apparatus such as a smart phone.

The communication section 210 performs a process of receiving packet data transmitted from the sensor unit 10 and sending the packet data to the processing section 200, or a process of transmitting a control command from the processing section 200 to the sensor unit 10.

The operation section 220 performs a process of acquiring operation data from a user and sending the operation data to the processing section 200. The operation section 220 may be, for example, a touch panel type display, a button, a key, or a microphone.

The ROM 230 stores a program for the processing section 200 performing various calculation processes or a control process, or various programs or data for realizing application functions.

The RAM 240 is used as a work area of the processing section 200, and is a storage section which temporarily stores a program or data read from the ROM 230, data which is input from the operation section 220, results of calculation executed by the processing section 200 according to various programs, and the like.

The recording medium 250 is a nonvolatile storage section storing data which is required to be preserved for a long period of time among data items generated through processing of the processing section 200. The recording medium 250 may store a program for the processing section 200 performing various calculation processes and a control process, or various program or data for realizing application functions.

In the present embodiment, the ROM 230, the RAM 240, or the recording medium 250 stores specification information regarding the golf club 3 (information regarding a length of the shaft, a position of the centroid thereof, a lie angle, a face angle, a loft angle, and the like), an installation position (a distance from the head or the grip end of the golf club 3) regarding the sensor unit 10, and information regarding a length of the arm or a position of the centroid of the subject 2, and this information is used by the processing section 200.

The display section 260 displays a processing result in the processing section 200 as text, a graph, a table, animation, and other images. The display section 260 may be, for example, a CRT, an LCD, a touch panel type display, and a head mounted display (HMD). A single touch panel type display may realize functions of the operation section 220 and the display section 260.

The sound output section 270 displays a processing result in the processing section 200 as a sound such as a voice or a buzzer sound. The sound output section 270 may be, for example, a speaker or a buzzer.

The processing section 200 performs a process of transmitting a control command to the sensor unit 10 according to a program stored in the ROM 230 or the recording medium 250, or a program which is received from a server via a network and is stored in the RAM 240 or the recording medium 250, various calculation processes on data which is received from the sensor unit 10 via the communication section 210, and various control processes. Particularly, by executing the program, in the present embodiment, the processing section 200 functions as a data acquisition portion 201, a first attitude information generation portion 202, a second attitude information generation portion 203, an attitude difference information generation portion 204, an advice information generation portion 205, a storage processing portion 206, a display processing portion 207, and a sound output processing portion 208.

The data acquisition portion 201 performs a process of receiving packet data which is received from the sensor unit 10 by the communication section 210, acquiring time information and measured data from the received packet data, and sending the time information and the measured data to the storage processing portion 206.

The storage processing portion 206 performs a process of receiving the time information and the measured data from the data acquisition portion 201 and storing the time information and the measured data in the RAM 240 in correlation with each other.

The first attitude information generation portion 202 performs a process of generating first attitude information regarding an attitude of the golf club 3 during address of the subject 2 using the measured data (the acceleration data and the angular velocity data) output from the sensor unit 10. In the present embodiment, the first attitude information generation portion 202 calculates an inclination amount of the golf club 3 with a direction of the gravitational acceleration as a reference, using measured data output from the acceleration sensor 100 during address of the subject 2, and generates the first attitude information using the inclination amount.

Specifically, the first attitude information generation portion 202 detects the stoppage action (the action in step S1 in Fig. 3) performed by the subject 2 before starting a swing action, in correlation with the time, using the time information and the measured data stored in the RAM 240. The first attitude information generation portion 202 calculates an offset amount using the measured data during stoppage, subtracts the offset amount from the measured data so as to perform bias correction, and calculates a position and an attitude (an initial position and an initial attitude) of the sensor unit 10 during address (stoppage action) of the subject 2 using the bias-corrected measured data. The first attitude information generation portion 202 may set an initial position of the sensor unit 10 to the origin (0, 0, 0) of the XYZ coordinate system, and may calculate an initial attitude of the sensor unit 10 on the basis of acceleration data and a direction of the gravitational acceleration during address (during stoppage action) of the subject 2. An attitude of the sensor unit 10 may be expressed by, for example, rotation angles (a roll angle, a pitch angle, and a yaw angle) around the X axis, the Y axis, and the Z axis, or a quaternion.

The first attitude information generation portion 202 calculates some or all of a lie angle $\alpha_1$, a face angle $\beta_1$, and a loft angle $\gamma_1$ (examples of inclination amounts of the golf club 3 with the direction of the gravitational acceleration as a reference) during address of the subject 2, using some or all of information pieces regarding an initial attitude of the sensor unit 10, and a lie angle, a face angle, and a loft angle as the specifications of the golf club 3, and generates the first attitude information including such information.

The signal processing section 120 of the sensor unit 10 may calculate an offset amount of measured data so as to perform bias correction on the measured data, and the acceleration sensor 100 and the angular velocity sensor 110 may have a bias correction function. In this case, it is not necessary for the first attitude information generation portion 202 to perform bias correction on the measured data.

The second attitude information generation portion 203 performs a process of generating second attitude information regarding an attitude of the golf club 3 during ball hitting of the subject 2, using the measured data (the acceleration data and the angular velocity data) output from the sensor unit 10. In the present embodiment, the second attitude information generation portion 203 calculates an attitude change of the sensor unit 10 from the time of address to the time of ball hitting of the subject 2 using the measured data output from the angular velocity sensor 110, and generates the second attitude information using the attitude change.

Specifically, the second attitude information generation portion 203 calculates a position and an attitude of the sensor unit 10 during swing action (during the action in step S2 in Fig. 3) of the subject 2 using the time information and the measured data stored in the RAM 240. The second attitude information generation portion 203 may calculate a change in a position from the initial position of the sensor unit 10 in a time series by integrating the acceleration data, and may calculate a change in an attitude from the initial attitude of the sensor unit 10 in a time series by performing rotation calculation using the angular velocity data. The second attitude information generation portion 203 defines a motion analysis model in which a length and a position of the centroid of the shaft of the golf club 3, an installation position of the sensor unit 10, features (rigid body and the like) of the golf club 3, or human features (a joint bending direction, and the like) are taken into consideration, and calculates a trajectory of the motion analysis model using information regarding the position and the attitude of the sensor unit 10, the length and the position of the centroid of the shaft of the golf club 3, the installation position of the sensor unit 10, and features (the length of the arms and the position of centroid, and the like) of the subject 2.

The second attitude information generation portion 203 detects a timing (time point) at which the subject 2 has hit the ball in a period of the swing action using the time information and the measured data stored in the RAM 240, calculates some or all of a lie angle $\alpha_2$, a face angle $\beta_2$, and a loft angle $\gamma_2$ during ball hitting of the subject 2, using some or all of information pieces regarding a position and an attitude of the motion analysis model during ball hitting (during impact), and a lie angle, a face angle, and a loft angle as the specifications of the golf club 3, and generates the second attitude information including such information.

The attitude difference information generation portion 204 performs a process of generating attitude difference information regarding an attitude difference between an attitude of the golf club 3 during address of the subject 2 and an attitude of the golf club 3 during ball hitting, using the first attitude information generated by the first attitude information generation portion 202 and the second attitude information generated by the second attitude information generation portion 203. Specifically, the attitude difference information generation portion 204 calculates some or all of a lie angle difference $\alpha_2-\alpha_1$, a face angle difference $\beta_2-\beta_1$, and a loft angle difference $\gamma_2-\gamma_1$ between the time of ball hitting and the time of address of the subject 2, and generates attitude difference information including such information.

The advice information generation portion 205 performs a process of generating advice information regarding an attitude to be taken by the golf club 3 during address of the subject 2 so that the golf club 3 takes an ideal attitude during ball hitting of the subject 2, using the attitude difference information generated by the attitude difference information generation portion 204. Specifically, the advice information generation portion 205 performs predetermined calculation using some or all of the lie angle difference $\alpha_2-\alpha_1$, the face angle difference $\beta_2-\beta_1$, and the loft angle difference $\gamma_2-\gamma_1$ between the time of ball hitting and the time of address of the subject 2, and thus generates advice information indicating what attitude is to be taken by the golf club 3 during address of the subject 2 so that some or all of a lie angle, a face angle, and a loft angle of the golf club 3 during ball hitting become ideal angles.

The advice information generation portion 205 may generate advice information such as the content that "lay (raise) the shaft by 5°", "open (close) the face by 5°", or "lay (raise) the face by 5°". For example, a buzzer or an LED may be provided in the sensor unit 10 or the motion analysis apparatus 20, and the advice information generation portion 205 may generate advice information such as the content that "lay (raise) the shaft until the buzzer sounds (until the LED is turned on)", "open (close) the face until the buzzer sounds (until the LED is turned on)", "lay (raise) the face until the buzzer sounds (until the LED is turned on)".

An ideal attitude of the golf club 3 during ball hitting of the subject 2 differs depending on the type of golf club 3, physical features of the subject 2, a swing habit, or the like, and thus the advice information generation portion 205 may perform predetermined calculation in which features of the golf club 3 or information regarding a trajectory of the motion analysis model is also taken into consideration, so as to generate advice information.

The storage processing portion 206 performs read/write processes of various programs or various data for the ROM 230, the RAM 240, and the recording medium 250. The storage processing portion 206 performs not only the process of storing the time information and the measured data received from the data acquisition portion 201 in the RAM 240 in correlation with each other, but also a process of storing the first attitude information, the second attitude information, the attitude difference information, the advice information, and the like in the RAM 240, or a process of storing the information in the recording medium 250 in a case where the information is desired to be kept as a record.

The display processing portion 207 performs a process of displaying various images (including text, symbols, and the like) on the display section 260. For example, the display processing portion 207 performs a process of reading the advice information stored in the RAM 240 or the recording medium 250 automatically or when a predetermined input operation is performed after a swing action of the subject 2 is completed, and displaying an advice image on the display section 260. The display processing portion 207 may read the first attitude information, the second attitude information, the attitude difference information, and the like stored in the RAM 240 or the recording medium 250, and may display various images on the display section 260. Alternatively, a display section may be provided in the sensor unit 10, and the display processing portion 207 may transmit an advice image or the like to the sensor unit 10 via the communication section 210, and the advice image or the like may be displayed on the display section of the sensor unit 10.

The sound output processing portion 208 performs a process of outputting various sounds (including voices, buzzer sounds, and the like) from the sound output section 270. For example, the sound output processing portion 208 may read the advice information stored in the RAM 240 or the recording medium 250 automatically or when a predetermined input operation is performed after a swing action of the subject 2 is completed, and may output an advice sound from the sound output section 270. The sound output processing portion 208 may read the first attitude information, the second attitude information, the attitude difference information, and the like stored in the RAM 240 or the recording medium 250, and may output various sounds from the sound output section 270. Alternatively, a sound output section may be provided in the sensor unit 10, and the sound output processing portion 208 may transmit an advice sound or the like to the sensor unit 10 via the communication section 210 and may output the advice sound or the like from the sound output section of the sensor unit 10.

A vibration mechanism may be provided in the motion analysis apparatus 20 or the sensor unit 10, and the advice information or the like may be converted into vibration information by the vibration mechanism so as to be presented to the subject 2.

[Advice information generation process]

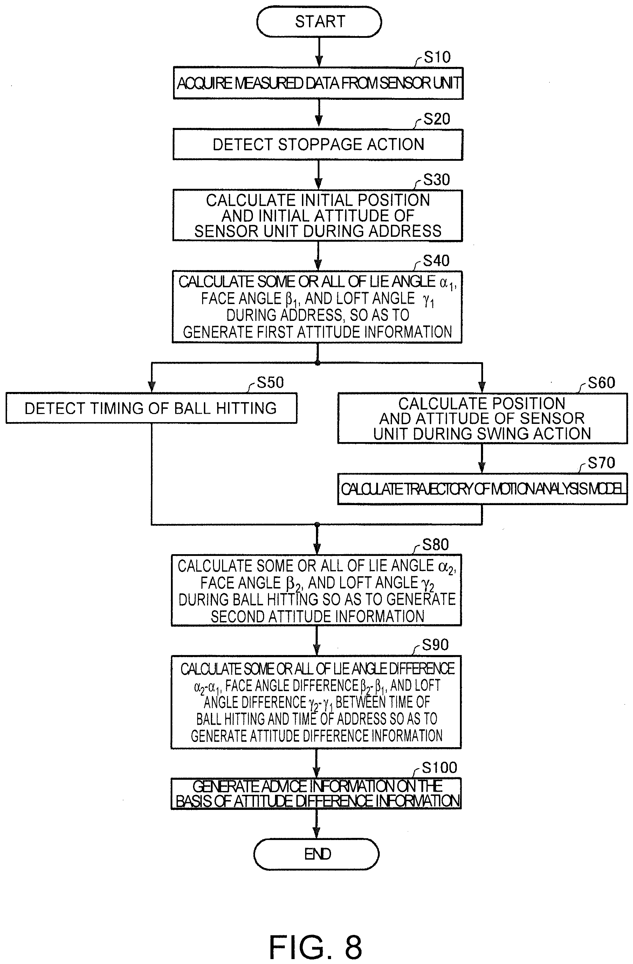

Fig. 8 is a flowchart illustrating examples of procedures of an advice information generation process performed by the processing section 200 in the present embodiment.

As illustrated in Fig. 8, first, the processing section 200 acquires measured data from the sensor unit 10 (S10). If initial measured data in a swing action (also including a stoppage action) of the subject 2 is acquired in step S10, the processing section 200 may perform processes in step S20 and the subsequent steps in real time, and may perform the processes in step S20 and the subsequent steps after acquiring some or all of a series of measured data in the swing action of the subject 2 from the sensor unit 10.

Next, the processing section 200 detects a stoppage action (address action) of the subject 2 (the action in step S1 in Fig. 4) using the measured data acquired from the sensor unit 10 (S20). In a case where the process is performed in real time, when the stoppage action (address action) is detected, the processing section 200 may output, for example, a predetermined image or sound, or may turn on an LED provided in the sensor unit 10, so as to notify the subj ect 2 of detection of the stoppage action, and the subject 2 may start a swing after checking the notification.

Next, the processing section 200 calculates an initial position and an initial attitude of the sensor unit 10 during address of the subject 2 using the measured data acquired from the sensor unit 10 (S30). For example, the processing section 200 sets an initial position of the sensor unit 10 to the origin of the XYZ coordinate system, and specifies a direction of the gravitational acceleration on the basis of the acceleration data measured by the sensor unit 10 so as to calculate an initial attitude in the XYZ coordinate system.

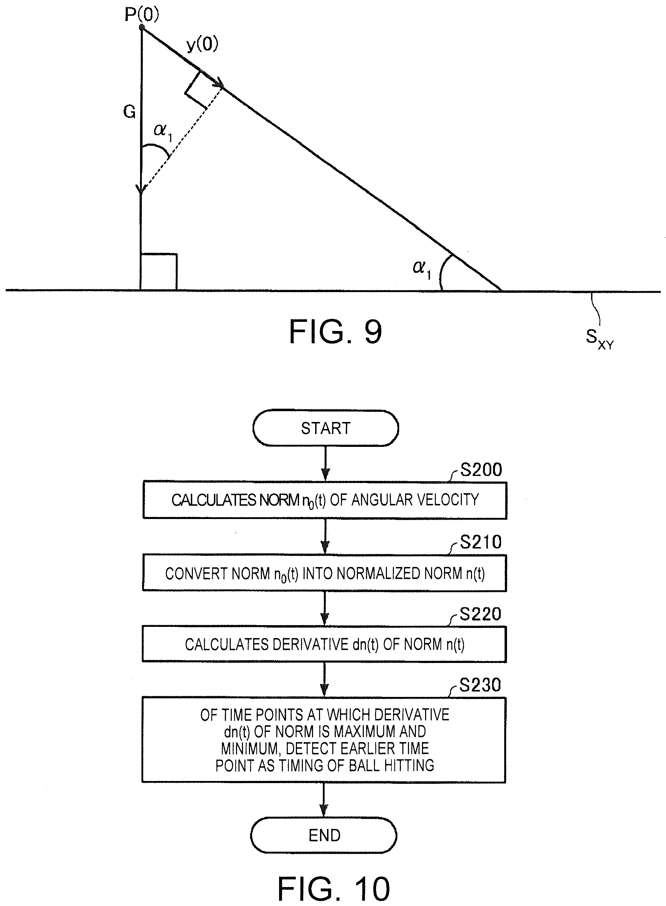

Next, the processing section 200 calculates some or all of the lie angle $\alpha_1$, the face angle $\beta_1$, and the loft angle $\gamma_1$ during address of the subject 2, so as to generate the first attitude information (S40). Fig. 9 is a diagram illustrating a relationship between a gravitational acceleration component measured by the sensor unit 10 and a lie angle during address, and, in Fig. 9, P(0) indicates an initial position of the sensor unit 10. As illustrated in Fig. 9, acceleration y(0) in the y axis direction measured by the sensor unit 10, the gravitational acceleration G, and the lie angle $\alpha_1$ during address satisfy a relationship of the following Equation (1), and thus the processing section 200 can calculate the lie angle $\alpha_1$ during address using Equation (1).

[Equation 1]

$$y(0) = G \cdot \sin \alpha_1 \cdots (1)$$

The processing section 200 may calculate the face angle $\beta_1$ or the loft angle $\gamma_1$ during address on the basis of the attitude of the sensor unit 10 and the specification information of the golf club 3.

Next, the processing section 200 detects a timing at which the subject 2 has hit the ball using the measured data acquired from the sensor unit 10 (S50).

The processing section 200 performs a process (S60) of calculating a position and an attitude of the sensor unit 10 during swing action of the subject 2, and a process (S70) of calculating a trajectory of the motion analysis model on the basis of changes in the position and the attitude of the sensor unit 10, in parallel to the process in step S50. The processing section 200 calculates a position by integrating the acceleration data measured by the sensor unit 10, calculates an attitude by performing rotation calculation using the angular velocity data measured by the sensor unit 10, and calculates a trajectory of the motion analysis model using the position and the attitude of the sensor unit 10, specification information of the golf club 3, an installation position of the sensor unit 10, feature information of the subject 2, and the like.

Next, the processing section 200 calculates some or all of the lie angle $\alpha_2$, the face angle $\beta_2$, and the loft angle $\gamma_2$ during ball hitting of the subject 2, using the trajectory of the motion analysis model, the specification information of the golf club, and the like, so as to generate the second attitude information (S80).

Next, the processing section 200 calculates some or all of a lie angle difference $\alpha_2-\alpha_1$, a face angle difference $\beta_2-\beta_1$, and a loft angle $\gamma_2-\gamma_1$ between the time of ball hitting and the time of address using the first attitude information and the second attitude information, so as to generate the attitude difference information (S90).

Finally, the processing section 200 generates advice information regarding an attitude to be taken by the golf club 3 during address so that the golf club 3 takes an ideal attitude during ball hitting, using the attitude difference information (S100).

In the flowchart of Fig. 8, order of the respective steps may be changed as appropriate within an allowable range.

[Impact detection process]

Fig. 10 is a flowchart illustrating examples of procedures of a process (the process in step S50 in Fig. 8) of detecting a timing at which the subject 2 has hit the ball.

As illustrated in Fig. 10, first, the processing section 200 calculates a value of the norm $n_0(t)$ of angular velocity at each time point t using the acquired angular velocity data (acceleration data for each time point t) (S200). For example, if the acceleration data items at the time point t are respectively indicated by x(t), y(t), and z(t), the norm $n_0(t)$ of the angular velocity is calculated according to the following Equation (2).

[Equation 2]

$$n_0(t) = \sqrt{x(t)^2 + y(t)^2 + z(t)^2} \cdots (2)$$

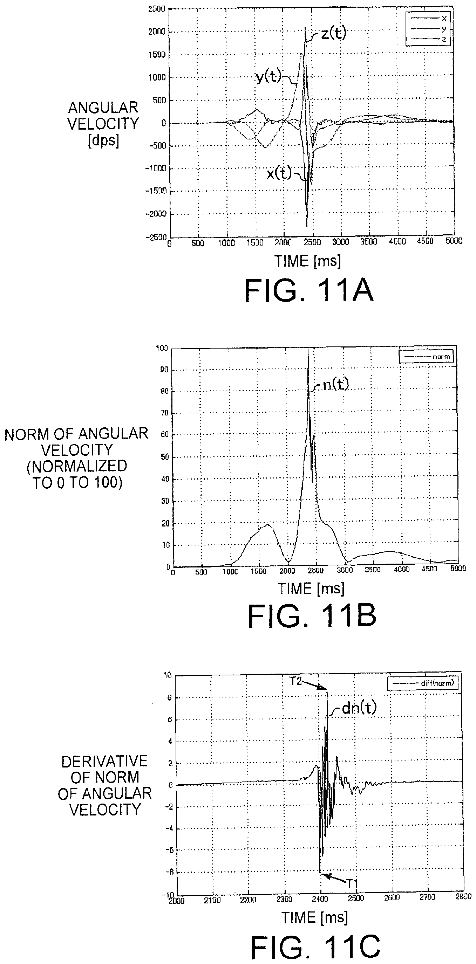

Fig. 11(A) illustrates examples of three-axis angular velocity data items x(t), y(t) and z(t) obtained when the subject 2 hits the golf ball 4 by performing a swing. In Fig. 11(A), a transverse axis expresses time (msec), and a longitudinal axis expresses angular velocity (dps).

Next, the processing section 200 converts the norm $n_0(t)$ of the angular velocity at each time point t into a norm n(t) which is normalized (scale-conversion) within a predetermined range (S210). For example, if the maximum value of the norm of the angular velocity in an acquisition period of measured data is $max(n_0)$, the norm $n_0(t)$ of the angular velocity is converted into the norm n(t) which is normalized within a range of 0 to 100 according to the following Equation (3).

[Equation 3]

$$n(t) = \frac{100 \times n_0(t)}{max(n_0)} \cdots (3)$$

Fig. 11(B) is a diagram in which the norm $n_0(t)$ of the three-axis angular velocities is calculated according to Equation (2) using the three-axis angular velocity data items x(t), y(t) and z(t) in Fig. 11(A), and then the norm n(t) normalized to 0 to 100 according to Equation (3) is displayed in a graph. In Fig. 11(B), a transverse axis expresses time (msec), and a longitudinal axis expresses a norm of the angular velocity.

Next, the processing section 200 calculates a derivative dn(t) of the normalized norm n(t) at each time point t (S220). For example, if a cycle for measuring three-axis angular velocity data items is indicated by $\Delta t$, the derivative (difference) dn(t) of the norm of the angular velocity at the time point t is calculated using the following Equation (4).

[Equation 4]

$$dn(t) = n(t) - n(t - \Delta t) \cdots (4)$$

Fig. 11(C) is a diagram in which the derivative dn(t) is calculated according to Equation (4) on the basis of the norm n(t) of the three-axis angular velocities in Fig. 11(B), and is displayed in a graph. In Fig. 11(C), a transverse axis expresses time (msec), and a longitudinal axis expresses a derivative value of the norm of the three-axis angular velocities. In Figs. 11 (A) and Fig. 11(B), the transverse axis is displayed at 0 seconds to 5 seconds, but, in Fig. 11(C), the transverse axis is displayed at 2 seconds to 2.8 seconds so that changes in the derivative value before and after ball hitting can be understood.

Finally, of time points at which a value of the derivative dn(t) of the norm becomes the maximum and the minimum, the processing section 200 detects the earlier time point as a ball hitting timing (S230). It is considered that a swing speed is the maximum at the moment of hitting a ball in a typical golf swing. In addition, since it is considered that a value of the norm of the angular velocity also changes according to a swing speed, a timing at which a derivative value of the norm of the angular velocity is the maximum or the minimum (that is, a timing at which the derivative value of the norm of the angular velocity is a positive maximum value or a negative minimum value) in a series of swing actions can be captured as a timing of ball hitting (impact). Since the golf club 3 vibrates due to ball hitting, a timing at which a derivative value of the norm of the angular velocity is the maximum and a timing at which a derivative value of the norm of the angular velocity is the minimum may occur in pairs, and, of the two timings, the earlier timing may be the moment of ball hitting. Therefore, for example, in the graph of Fig. 11(C), of T1 and T2, T1 is detected as a timing of ball hitting.

In a case where the subject 2 performs a swing action, a series of rhythms is expected that the subject stops the golf club at the top position, performs a down swing, hits the ball, and performs follow-through. Therefore, according to the flowchart of Fig. 10, the processing section 200 may detect candidates of timings at which the subject 2 has hit the ball, determine whether or not measured data before and after the detected timing matches the rhythms, fix the detected timing as a timing at which the subject 2 has hit the ball if the data matches the rhythms, and detect the next candidate if the data does not match the rhythms.

In the flowchart of Fig. 10, the processing section 200 detects a timing of ball hitting using the three-axis angular velocity data, but can also detect a timing of ball hitting in the same manner using three-axis acceleration data.

[Attitude calculation process of sensor unit]

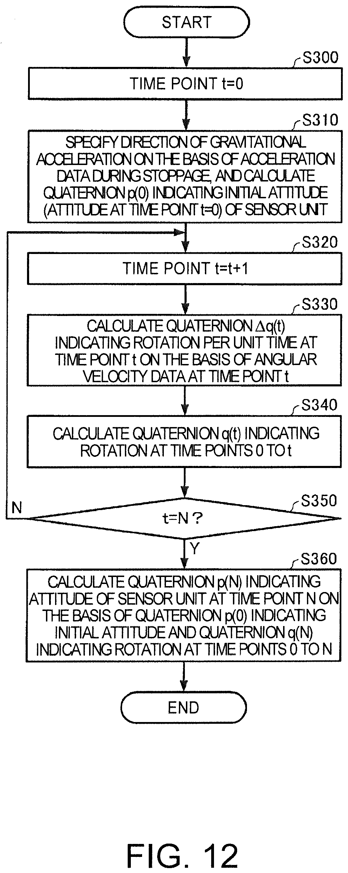

Fig. 12 is a flowchart illustrating examples of procedures of a process (some processes in step S30 and step S60 in Fig. 8) of calculating an attitude (an initial attitude and an attitude at a time point N) of the sensor unit 10.

As illustrated in Fig. 12, first, at a time point t=0 (S300), the processing section 200 specifies a direction of the gravitational acceleration on the basis of three-axis acceleration data during stoppage, and calculates a quaternion p(0) indicating an initial attitude (an attitude at the time point t=0) of the sensor unit 10 (S310).

A quaternion q indicating rotation is expressed by the following Equation (5).
[Equation 5]

$$q = (w, x, y, z) \cdots (5)$$

In Equation (5), if a rotation angle of target rotation is indicated by $\theta$, and a unit vector of a rotation axis is indicated by $(r_x, r_y, r_z)$, w, x, y, and z are expressed as in Equation (6).
[Equation 6]

$$w = \cos\frac{\theta}{2}, x = r_x \cdot \sin\frac{\theta}{2}, y = r_y \cdot \sin\frac{\theta}{2}, z = r_z \cdot \sin\frac{\theta}{2} \cdots (6)$$

Since the sensor unit 10 is stopped at the time point t=0, a quaternion q(0) indicating rotation at the time point t=0 with $\theta$=0 is expressed as in the following Equation (7) on the basis of Equation (5) obtained by assigning $\theta$=0 to Equation (6).
[Equation 7]

$$q(0) = (1, 0, 0, 0) \cdots (7)$$

Next, the processing section 200 updates the time point t to t+1 (S320). Here, since the time point t=0, a time point is updated to a time point t=1.

Next, the processing section 200 calculates a quaternion Δq(t) indicating rotation per unit time at the time point t on the basis of three-axis angular velocity data at the time point t (S330).

For example, if the three-axis angular velocity data at the time point t is indicated by $\omega(t) = (\omega_x(t),\omega_y(t),\omega_z(t))$, the magnitude $|\omega(t)|$ of the angular velocity per sample measured at the time point t is calculated using the following Equation (8).

[Equation 8]

$$|\omega(t)| = \sqrt{\omega_x(t)^2 + \omega_y(t)^2 + \omega_z(t)^2} \cdots (8)$$

The magnitude $|\omega(t)|$ of the angular velocity indicates a rotation angle per unit time, and thus a quaternion Δq(t+1) indicating rotation per unit time at the time point t is calculated using the following Equation (9).

[Equation 9]

$$\Delta q(t) = \left( \cos\frac{|\omega(t)|}{2}, \frac{\omega_x(t)}{|\omega(t)|}\sin\frac{|\omega(t)|}{2}, \frac{\omega_y(t)}{|\omega(t)|}\sin\frac{|\omega(t)|}{2}, \frac{\omega_z(t)}{|\omega(t)|}\sin\frac{|\omega(t)|}{2} \right) \cdots (9)$$

Here, since t=1, the processing section 200 calculates Δq(1) according to Equation (9) using three-axis angular velocity data $\omega(1)=(\omega_x(1),\omega_y(1),\omega_z(1))$ at the time point t=1.

Next, the processing section 200 calculates a quaternion q(t) indicating rotation at time points 0 to t (S340). The quaternion q(t) is calculated according to the following Equation (10).

[Equation 10]

$$q(t) = q(t-1) \cdot \Delta q(t) \cdots (10)$$

Here, since t=1, the processing section 200 calculates q(1) according to Equation (10) on the basis of q(0) in Equation (7) and Δq(1) calculated in step S330.

Next, the processing section 200 repeatedly performs the processes in steps S320 to S340 until t becomes N, and, at the time point t=N (Y in S350), calculates a quaternion p(N) indicating an attitude at the time point N on the basis of the quaternion p(0) indicating the initial attitude calculated in step S310 and the quaternion q(N) indicating the rotation at the time points t=0 to N in the previous step S340 (S360), and then finishes the process.

The processing section 200 calculates an attitude of the sensor unit 10 during ball hitting with the time point at which the subject 2 has hit as the time point N, according to the procedures of the flowchart of Fig. 12.

As described above, according to the motion analysis system 1 or the motion analysis apparatus 20 of the present embodiment, since advice information based on information regarding an attitude difference between an attitude of the golf club 3 during address and an attitude of the golf club 3 during ball hitting is presented to the subj ect 2, the subj ect 2 can specifically recognize an attitude to be taken by the golf club 3 during address based on the advice information. Consequently, it is possible to prompt the subject 2 to improve a golf swing.

According to the motion analysis system 1 or the motion analysis apparatus 20 of the present embodiment, since advice information can be generated using measured data from the sensor unit 10 attached to the golf club 3, it is not necessary to prepare a large-sized measurement tool such as a camera, and a measurement location is not greatly limited.

2. Modification Examples

The invention is not limited to the present embodiment, and may be variously modified within the scope of the spirit of the invention.

For example, in the above-described embodiment, the processing section 200 generates attitude difference information regarding a difference between an attitude of the golf club 3 during address of the subject 2 and an attitude of the golf club 3 during ball hitting of the subject 2, and generates advice information using the attitude difference information, but may not generate first attitude information if there is no individual difference (if an individual difference is not taken into consideration) in an ideal attitude of the golf club 3 during ball hitting. In other words, instead of the first attitude information generation portion 202 and the second attitude information generation portion 203 , the processing section 200 may be provided with an attitude information generation portion which performs a process of calculating an initial position and an initial attitude of the sensor unit 10 during address, a process of calculating a position and an attitude of the sensor unit 10 during swing action, a process of calculating a trajectory of the motion analysis model, and a process of generating attitude information regarding an attitude of the sensor unit 10 during ball hitting. In this case, for example, an attitude in which a lie angle, a face angle, a loft angle, and the like of the golf club 3 respectively become predetermined values defined depending on the type of golf club 3 is set as an ideal attitude of the golf club 3 during ball hitting of the subject 2, and the attitude difference information generation portion 204 may calculate a difference between the attitude information generated by the attitude information generation portion and the ideal attitude of the golf club 3. The advice information generation portion 205 may generate advice information such as the content that lay (raise) the shaft by an amount corresponding to the attitude difference, open (close) the face by 5°, or raise (lay) the face.

In the above-described embodiment, the motion analysis system (motion analysis apparatus) generating advice information regarding a golf swing has been exemplified, but, the invention is applicable to a motion analysis system (motion analysis apparatus) generating advice information regarding swings during stoppage of a subject in various sports such as tennis or baseball.

In the above-described embodiment, the motion analysis apparatus 20 calculates the trajectory of motion analysis model using measured data from a single sensor unit 10, but, a plurality of sensor units 10 may be attached to the golf club 3 or the subject 2, and the motion analysis apparatus 20 may calculate the trajectory of motion analysis model using measured data from the plurality of sensor units 10.

In the above-described embodiment, the sensor unit 10 and the motion analysis apparatus 20 are provided separately from each other, but may be integrated into a motion analysis apparatus which can be attached to an exercise appliance or a subject.

The above-described embodiment and respective modification examples are only examples, and the invention is not limited thereto. For example, the embodiment and the respective modification examples may be combined with each other as appropriate.

For example, the invention includes substantially the same configuration (for example, a configuration in which functions, methods, and results are the same, or a configuration in which objects and effects are the same) as the configuration described in the embodiment. The invention includes a configuration in which an inessential part of the configuration described in the embodiment is replaced with another part. The invention includes a configuration which achieves the same operation and effect or a configuration capable of achieving the same object as in the configuration described in the embodiment. The invention includes a configuration in which a well-known technique is added to the configuration described in the embodiment.

Reference Signs List

| | |
|---|---|
| 1 | MOTION ANALYSIS SYSTEM |
| 2 | SUBJECT |
| 3 | GOLF CLUB |
| 4 | GOLF BALL |
| 10 | SENSOR UNIT |
| 20 | MOTION ANALYSIS APPARATUS |
| 100 | ACCELERATION SENSOR |
| 110 | ANGULAR VELOCITY SENSOR |
| 120 | SIGNAL PROCESSING SECTION |
| 130 | COMMUNICATION SECTION |
| 200 | PROCESSING SECTION |
| 201 | DATA ACQUISITION PORTION |
| 202 | FIRST ATTITUDE INFORMATION GENERATION PORTION |
| 203 | SECOND ATTITUDE INFORMATION GENERATION PORTION |
| 204 | ATTITUDE DIFFERENCE INFORMATION GENERATION PORTION |
| 205 | ADVICE INFORMATION GENERATION PORTION |
| 206 | STORAGE PROCESSING PORTION |
| 207 | DISPLAY PROCESSING PORTION |
| 208 | SOUND OUTPUT PROCESSING PORTION |
| 210 | COMMUNICATION SECTION |

220    OPERATION SECTION
230    ROM
240    RAM
250    RECORDING MEDIUM
260    DISPLAY SECTION
270    SOUND OUTPUT SECTION

**Claims**

1.  A motion analysis method comprising:

    generating first attitude information regarding an attitude of an exercise appliance during address of a subject, using outputs from an inertial sensor;
    generating second attitude information regarding an attitude of the exercise appliance during ball hitting of the subject, using outputs from the inertial sensor; and
    generating attitude difference information regarding an attitude difference between an attitude of the exercise appliance during the address and an attitude of the exercise appliance during the ball hitting using the first attitude information and the second attitude information.

2.  The motion analysis method according to claim 1,
    wherein the inertial sensor includes an acceleration sensor, and
    wherein, in the generating of first attitude information, an inclination amount of the exercise appliance with a direction of the gravitational acceleration as a reference is calculated using outputs from the acceleration sensor during the address, and the first attitude information is generated using the inclination amount.

3.  The motion analysis method according to claim 1 or 2,
    wherein the inertial sensor includes an angular velocity sensor, and
    wherein, in the generating of second attitude information, an attitude change amount of the inertial sensor from the time of address to the time of ball hitting is calculated using outputs from the angular velocity sensor, and the second attitude information is generated using the attitude change amount.

4.  The motion analysis method according to any one of claims 1 to 3, further comprising:

    generating advice information regarding an attitude to be taken by the exercise appliance or the subject during the address, using the attitude difference information.

5.  The motion analysis method according to any one of claims 1 to 4,
    wherein the first attitude information and the second attitude information include information regarding an angle of a shaft of the exercise appliance relative to a horizontal plane.

6.  The motion analysis method according to any one of claims 1 to 5,
    wherein the first attitude information and the second attitude information include information regarding an angle of a hitting portion of the exercise appliance relative to a virtual plane orthogonal to a target line indicating a hit ball direction.

7.  The motion analysis method according to any one of claims 1 to 6,
    wherein the first attitude information and the second attitude information include information regarding an angle of the hitting portion of the exercise appliance relative to a plane orthogonal to the horizontal plane.

8.  The motion analysis method according to any one of claims 1 to 7,
    wherein the inertial sensor is attached to the exercise appliance.

9.  The motion analysis method according to any one of claims 1 to 8,
    wherein the exercise appliance is a golf club.

10. A motion analysis apparatus comprising:

a first attitude information generation portion generating first attitude information regarding an attitude of an exercise appliance during address of a subject, using outputs from an inertial sensor;

a second attitude information generation portion generating second attitude information regarding an attitude of the exercise appliance during ball hitting of the subject, using outputs from the inertial sensor; and

an attitude difference information generation portion generating attitude difference information regarding an attitude difference between an attitude of the exercise appliance during the address and an attitude of the exercise appliance during the ball hitting using the first attitude information and the second attitude information.

**11.** A motion analysis system comprising:

the motion analysis apparatus according to claim 10; and the inertial sensor.

**12.** A program causing a computer to execute:

generating first attitude information regarding an attitude of an exercise appliance during address of a subject, using outputs from an inertial sensor;

generating second attitude information regarding an attitude of the exercise appliance during ball hitting of the subject, using outputs from the inertial sensor; and

generating attitude difference information regarding an attitude difference between an attitude of the exercise appliance during the address and an attitude of the exercise appliance during the ball hitting using the first attitude information and the second attitude information.

FIG. 1

EP 3 120 901 A1

## FIG. 2

## FIG. 3

START

S1
HOLD GOLF CLUB SO AS TO TAKE
ADDRESS ATTITUDE, AND STOP FOR
PREDETERMINED TIME OR MORE

S2
PERFORM SWING ACTION SO AS TO HIT BALL

END

FIG. 4

FIG. 5

FIG. 6

FIG. 7

START

S10
ACQUIRE MEASURED DATA FROM SENSOR UNIT

S20
DETECT STOPPAGE ACTION

S30
CALCULATE INITIAL POSITION
AND INITIAL ATTITUDE OF
SENSOR UNIT DURING ADDRESS

S40
CALCULATE SOME OR ALL OF LIE ANGLE $\alpha_1$,
FACE ANGLE $\beta_1$, AND LOFT ANGLE $\gamma_1$
DURING ADDRESS, SO AS TO
GENERATE FIRST ATTITUDE INFORMATION

S50
DETECT TIMING OF BALL HITTING

S60
CALCULATE POSITION
AND ATTITUDE OF SENSOR
UNIT DURING SWING ACTION

S70
CALCULATE TRAJECTORY OF MOTION ANALYSIS MODEL

S80
CALCULATE SOME OR ALL OF LIE ANGLE $\alpha_2$,
FACE ANGLE $\beta_2$, AND LOFT ANGLE $\gamma_2$
DURING BALL HITTING SO AS TO GENERATE
SECOND ATTITUDE INFORMATION

S90
CALCULATE SOME OR ALL OF LIE ANGLE DIFFERENCE
$\alpha_2$-$\alpha_1$, FACE ANGLE DIFFERENCE $\beta_2$-$\beta_1$, AND LOFT
ANGLE DIFFERENCE $\gamma_2$-$\gamma_1$ BETWEEN TIME OF
BALL HITTING AND TIME OF ADDRESS SO AS TO
GENERATE ATTITUDE DIFFERENCE INFORMATION

S100
GENERATE ADVICE INFORMATION ON THE
BASIS OF ATTITUDE DIFFERENCE INFORMATION

END

FIG. 8

P(0)

y(0)

G

$\alpha_1$

$\alpha_1$

$S_{XY}$

## FIG. 9

START

↓

CALCULATES NORM $n_0(t)$ OF ANGULAR VELOCITY　S200

↓

CONVERT NORM $n_0(t)$ INTO NORMALIZED NORM $n(t)$　S210

↓

CALCULATES DERIVATIVE $dn(t)$ OF NORM $n(t)$　S220

↓

OF TIME POINTS AT WHICH DERIVATIVE
$dn(t)$ OF NORM IS MAXIMUM AND
MINIMUM, DETECT EARLIER TIME
POINT AS TIMING OF BALL HITTING　S230

↓

END

## FIG. 10

ANGULAR VELOCITY [dps]

TIME [ms]

FIG. 11A

NORM OF ANGULAR VELOCITY (NORMALIZED TO 0 TO 100)

TIME [ms]

FIG. 11B

DERIVATIVE OF NORM OF ANGULAR VELOCITY

TIME [ms]

FIG. 11C

START

S300
TIME POINT t=0

S310
SPECIFY DIRECTION OF GRAVITATIONAL ACCELERATION ON THE BASIS OF ACCELERATION DATA DURING STOPPAGE, AND CALCULATE QUATERNION p(0) INDICATING INITIAL ATTITUDE (ATTITUDE AT TIME POINT t=0) OF SENSOR UNIT

S320
TIME POINT t=t+1

S330
CALCULATE QUATERNION Δq(t) INDICATING ROTATION PER UNIT TIME AT TIME POINT t ON THE BASIS OF ANGULAR VELOCITY DATA AT TIME POINT t

S340
CALCULATE QUATERNION q(t) INDICATING ROTATION AT TIME POINTS 0 TO t

S350
t=N ?
N
Y

S360
CALCULATE QUATERNION p(N) INDICATING ATTITUDE OF SENSOR UNIT AT TIME POINT N ON THE BASIS OF QUATERNION p(0) INDICATING INITIAL ATTITUDE AND QUATERNION q(N) INDICATING ROTATION AT TIME POINTS 0 TO N

END

# FIG. 12

## INTERNATIONAL SEARCH REPORT

| International application No. |
| --- |
| PCT/JP2015/001249 |

A.  CLASSIFICATION OF SUBJECT MATTER
*A63B69/36*(2006.01)i

According to International Patent Classification (IPC) or to both national classification and IPC

B.  FIELDS SEARCHED

Minimum documentation searched (classification system followed by classification symbols)
A63B69/36

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2012-29910 A  (MRC Composite Products Co., Ltd.),<br>16 February 2012 (16.02.2012),<br>paragraphs [0009] to [0026]; fig. 1 to 5<br>(Family: none) | 1-3,5-12<br>4 |
| Y | JP 03-026281 A  (Kabushiki Kaisha Oyo Keisoku Kenkyusho),<br>04 February 1991 (04.02.1991),<br>claim 1<br>& US 5111410 A | 4 |
| A | JP 2013-128764 A  (The Yokohama Rubber Co., Ltd.),<br>04 July 2013 (04.07.2013),<br>entire text; all drawings<br>& WO 2013/076980 A1     & KR 10-2014-0062184 A | 1-12 |

☐  Further documents are listed in the continuation of Box C.          ☐  See patent family annex.

| | |
| --- | --- |
| *    Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 20 May 2015 (20.05.15) | 02 June 2015 (02.06.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**EP 3 120 901 A1**

## REFERENCES CITED IN THE DESCRIPTION

### Patent documents cited in the description

• JP 2008073210 A